# EUROPÄISCHE PATENTSCHRIFT

(11) **EP 3 416 833 B1**
(45) Veröffentlichungstag und Bekanntmachung des Hinweises auf die Patenterteilung: **05.08.2020**
(21) Anmeldenummer: 16813069.8
(22) Anmeldetag: 19.12.2016
(51) Int. Cl.: B60C 9/00, B60C 9/20, B60C 9/04

(54) **FAHRZEUGLUFTREIFEN**
PNEUMATIC VEHICLE TYRE
PNEUMATIQUE POUR VÉHICULE

(30) Priorität: 16.02.2016 DE 102016202296
(43) Veröffentlichungstag der Anmeldung: 26.12.2018
(73) Patentinhaber: Continental Reifen Deutschland GmbH, 30165 Hannover (DE)
(72) Erfinder: VOLK, Heiner, 31535 Neustadt (DE); STRÜBEL, Christian, 30559 Hannover (DE); WENCKEL, Mathias, 30539 Hannover (DE)
(74) Vertreter: Finger, Karsten
(86) Internationale Anmeldenummer: PCT/EP2016/081636
(87) Internationale Veröffentlichungsnummer: WO 2017/140401

(56) Entgegenhaltungen:
- WO-A1-2015/181787
- DE-A1-102010 038 199
- DE-A1-102013 107 475
- DE-A1-102013 226 442
- JP-U- H0 719 393
- US-A1- 2013 206 302

## Beschreibung

Die Erfindung betrifft einen Fahrzeugluftreifen in Radialbauart, insbesondere für Personenkraftwagen, mit einem Gürtelverband aus zumindest zwei Gürtellagen, einem profilierten Laufstreifen, Wulstbereichen mit Wulstkernen und einer insbesondere einlagig ausgeführten Karkasseinlage mit textilen Festigkeitsträgern, wobei die Gürtellagen in eine Gummierungsmischung eingebettete parallel und beabstandet zueinander angeordnete Festigkeitsträger aus Stahl aufweisen, wobei die Stahl-Festigkeitsträger in der ersten Gürtellage die Stahl-Festigkeitsträger in der zweiten Gürtellage kreuzen und wobei zwischen der Karkasseinlage und der ersten Gürtellage, symmetrisch zur Äquatorialebene, ein Verstärkungsstreifen eingebaut ist, der eine Breite von 20 mm bis 70 % der Breite der ersten Gürtellage aufweist und textile Festigkeitsträger enthält, welche parallel zueinander und unter einem Winkel zur Umfangsrichtung verlaufen, welcher zumindest dem Winkel der Stahl-Festigkeitsträger in den Gürtellagen und höchstens dem Winkel der textilen Festigkeitsträger in der Karkasseinlage entspricht.

Ein derartiger PKW-Fahrzeugluftreifen ist aus der DE 10 2013 107 475 A1 bekannt. Die Karkasseinlage des Reifens enthält unter einem Winkel von zirka 90° zur Umfangsrichtung verlaufende textile Korde aus Polyester oder Rayon und die Gürtellagen enthalten einander entsprechend kreuzende Stahlkorde, welche innerhalb jeder Gürtellage parallel zueinander und zur Umfangsrichtung unter einem Winkel von 20° bis 40°, insbesondere von 27°, verlaufen. Der zwischen der Karkasseinlage und der ersten Gürtellage eingebaute Verstärkungsstreifen weist eine Breite von 15 mm bis 50% der Breite der ersten Gürtellage auf und enthält textile Festigkeitsträger, welche zur Umfangsrichtung unter einem Winkel von 20° bis 90°, insbesondere von 20° bis 32° orientiert sind. Ein derart aufgebauter PKW-Reifen soll insbesondere eine erhöhte Durchschlagfestigkeit aufweisen.

Die DE 10 2010 038 199 A1 offenbart einen PKW-Fahrzeugluftreifen in Radialbauart mit einem Gürtelverband mit drei Gürtellagen. Die Festigkeitsträger in den beiden radial inneren Gürtellagen sind Stahl-Monofilamente mit einem runden Querschnitt mit einem Durchmesser von 0,35 mm. Die dritte Gürtelalge ist eine Sperrlage, welche zumindest im Bereich der Äquatorialebene des Fahrzeugluftreifens angeordnet ist, wobei die Festigkeitsträger in dieser dritten Gürtellage Stahl-Monofilamente mit einem Durchmesser von 0,20 mm bis 0,60 mm sind, die parallel zueinander und unter einem Winkel von 50° bis 90° zur der Umfangsrichtung des Fahrzeugluftreifens verlaufen. Die Breite dieser dritten Gürtellage beträgt 30% bis 110% der Breite der ersten Gürtellage und kann radial innerhalb oder radial außerhalb im Gürtelpaket angeordnet sein.

Ein derart ausgeführter Fahrzeugluftreifen soll eine rollwiderstandsoptimierte Gürtelkonstruktion aufweisen, die die Seitenführungskraft auf einem hohen Niveau hält oder verbessert und zudem dazu beiträgt, dass der Fahrzeugluftreifen den so genannten Plungertest besteht. Der Plungertest ist eine statische Prüfung der Festigkeit des Fahrzeugluftreifens gegenüber penetrierenden Fahrbahnhindernissen und wird mittels eines ein- oder durchdrückenden Stahldornes, welcher ein halbkugeliges Ende aufweist, durchgeführt, wobei der Stahldorn im Bereich der Äquatorialebene des Reifens auf den Laufstreifen senkrecht aufgesetzt und mit einer vorgegebenen Eindringgeschwindigkeit eingedrückt wird. Dieser bekannte Fahrzeugluftreifen genügt jedoch den heutigen Anforderungen hinsichtlich eines möglichst geringen Rollwiderstandes nicht mehr, es wäre daher notwendig, das Gewicht von PKW-Reifen zur Reduktion des Rollwiderstandes noch mehr zu verringern, insbesondere indem in den den Reifen verstärkenden Lagen, insbesondere Gürtellagen und Karkasslagen, Gewicht verringert wird. Es ist bekannt, dass durch solche Maßnahmen die Steifigkeit des Fahrzeugluftreifens im Bereich des Reifenzenites merklich reduziert wird, was bei den meisten Reifen zu einer Verringerung der Seitenkraftsteifigkeit führt, insbesondere der "cornering stiffness".

Der Erfindung liegt daher die Aufgabe zugrunde, einen Fahrzeugluftreifen der eingangs genannten Art derart zu auszuführen, dass eine weitere Verringerung des Gewichtes der Gürtellagen und damit des Rollwiderstandes möglich ist, ohne dass das Fahrzeughandling, insbesondere die "cornering stiffness", beeinträchtigt wird.

Gelöst wird die gestellte Aufgabe erfindungsgemäß dadurch, dass die Stahl-Festigkeitsträger in den Gürtellagen Monofilamente mit einem Durchmesser von 0,28 mm bis 0,32 mm oder Stahlkorde der Konstruktion 2 x 0,28 mm bis 2 x 0,32 mm sind, wobei die textilen Festigkeitsträger im Verstärkungsstreifen unter einem Winkel von 50° bis 70° zur Umfangsrichtung verlaufen.

Es hat sich herausgestellt, dass durch entsprechende Stahl-Festigkeitsträger in den Gürtellagen das Gewicht des Fahrzeugluftreifens weiter verringert werden kann und dass ein mit textilen Festigkeitsträgern versehener Verstärkungsstreifen im Zenitbereich des Reifens ausreicht, um die Handlingeigenschaften des Reifens auf gutem Niveau zu halten, insbesondere einen schnellen Aufbau von Seitenkräften und eine gute "cornering stiffness" sicherzustellen. Das verringerte Gewicht reduziert in erwünschter Weise den Rollwiderstand des Reifens.

Der gewählte Winkel der textilen Festigkeitsträger im Verstärkungsstreifen relativ zu den Festigkeitsträgern der Gürtellage und der Karkasseinlage ist für die Steifigkeit des Fahrzeugluftreifens in Bereich des Reifenzenites vorteilhaft.

Bei einer bevorzugten Ausführungsform der Erfindung weist der Verstärkungsstreifen eine Breite von 20 mm bis 60 % der Breite der ersten Gürtellage auf. Vorzugsweise weist Verstärkungsstreifen eine Breite von 20 mm bis 50 mm auf. Es kann daher ein verhältnismäßig schmaler Verstärkungsstreifen verwendet werden, um den erwünschten Effekt auf die Handlingeigenschaften zu erzielen.

Als Material für die textilen Festigkeitsträger im Verstärkungsstreifen kommen unterschiedliche Materialien in Frage. Besonders bevorzugt ist eine Ausführung, bei der die textilen Festigkeitsträger im Verstärkungsstreifen Polyestergarne mit 550 dtex bis 1680 dtex, insbesondere 1100 dtex bis 1680 dtex, sind. Die textilen Festigkeitsträger können ferner gemäß der Erfindung auch Polyesterkorde aus zwei miteinander verdrehten Garnen mit jeweils mit 550 dtex bis 1680 dtex, insbesondere 1100 dtex bis 1680 dtex, sein.

Bei einer weiteren Ausführungsform der Erfindung sind die textilen Festigkeitsträger Nylongarne mit 470 dtex bis 1400 dtex. Die textilen Festigkeitsträger können ferner gemäß der Erfindung Nylonkorde aus zwei miteinander verdrehten Garnen mit jeweils 470 dtex bis 1400 dtex, insbesondere 940 dtex bis 1400 dtex.

Gerade mit Festigkeitsträgern aus den erwähnten solchen Materialien lässt sich eine gute Ausgewogenheit zwischen den erwünschten technischen Effekten - schneller Aufbau von Seitenkräften und eine gute cornering-stiffness" -und einer Gewichtsreduktion erzielen.

Auch den Stahl-Festigkeitsträgern in den Gürtellagen kommt diesbezüglich eine gewisse Bedeutung zu. Von besonderem Vorteil ist dabei, wenn die Monofilamente in den Gürtellagen einen Durchmesser von 0,30 mm, aufweisen. Darüber hinaus ist auch die Verwendung von Stahlkorden üblicher Konstruktionen in den Gürtellagen vorteilhaft, insbesondere Stahlkorde der Konstruktionen 2 x 0,28 mm, 2 x 0,30 mm oder 2 x 0,32 mm.

Die Festigkeitsträger in den Gürtellagen können unter den üblichen Winkeln von 18° bis 34°, insbesondere von 20° bis 28°, zur Umfangsrichtung verlaufen.

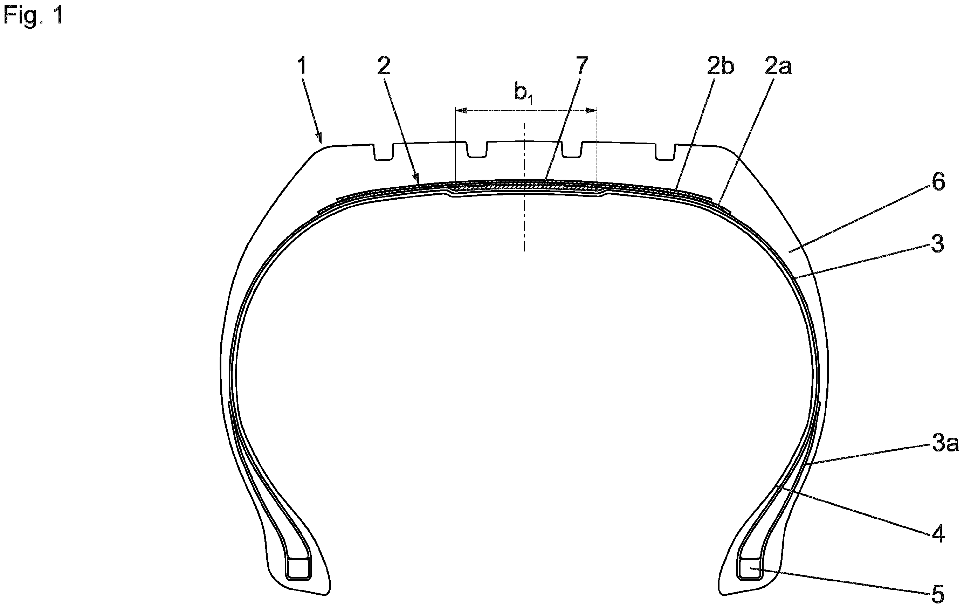

Weitere Merkmale, Vorteile und Einzelheiten der Erfindung werden nun anhand der einzigen Zeichnungsfigur, Fig. 1, die schematisch einen Querschnitt durch einen Fahrzeugluftreifen zeigt, näher beschrieben.

Erfindungsgemäß ausgeführte Fahrzeugluftreifen sind insbesondere C1- oder C2-Reifen, daher Reifen für PKW, Vans oder Light Trucks, in Radialbauart. In dem in Fig. 1 gezeigten Querschnitt sind einige der wesentlichen Bauteile eines solchen Fahrzeugluftreifens dargestellt, nämlich ein profilierter Laufstreifen 1, eine Gürtelverband 2 aus mehreren, insbesondere zwei, Gürtellagen 2a, 2b, eine vorzugsweise einlagig ausgeführte Karkasseinlage 3, eine luftdichte Innenschicht 4, Wulstbereiche mit Wulstkernen 5 und Seitenwände 6. Der Gürtelverband 2 kann ferner eine nicht dargestellte, ein- oder mehrlagig ausgeführte Gürtelbandage mit zumindest im Wesentlichen in Umfangsrichtung verlaufenden Festigkeitsträgern aus einem textilen Material, beispielsweise Nylon, aufweisen. Der profilierte Laufstreifen 1 kann in an sich bekannter Weise Profilblöcke, Profilrippen und dergleichen sowie Umfangsrillen, Querrillen, sonstige Nuten und Einschnitte umfassen.

Die Karkasseinlage 3 enthält textile Festigkeitsträger, beispielsweise aus Polyester oder Rayon, welche in eine Gummimischung, die Karkassgummierung, eingebettet sind und in der Karkasseinlage 3 zumindest im Wesentlichen in radialer Richtung, daher im rechten Winkel zur Umfangsrichtung des Reifens, verlaufen. Die Karkasseinlage ist in jedem Wulstbereich um den Wulstkern 5 herumgeschlagen, die derart gebildeten Karkasshochschläge 3a enden im Bereich der Seitenwände 6.

Die Gürtellagen 2a, 2b enthalten Stahl- Festigkeitsträger, die entweder Monofilamente mit einem Durchmesser von 0,20 mm bis 0,40 mm oder Stahlkorde der Konstruktion 2 x 0,28 mm bis 2 x 0,32 mm sind. Bevorzugt sind im Querschnitt runde Monofilamente mit einem Durchmesser von 0,28 mm bis 0,32 mm, insbesondere von 0,30 mm, oder Stahlkorde der Konstruktion 2 x 0,28 mm, 2 x 0,30 mm 2 x 0,32 mm. Die Stahl- Festigkeitsträger verlaufen in jeder Gürtellage 2a, 2b jeweils parallel zueinander und unter einem Winkel von 18° bis 34°, insbesondere 20° bis 28°, zur Umfangsrichtung des Reifens. Der Verlauf der Stahl- Festigkeitsträger in den beiden Gürtellagen 2a, 2b ist dabei in an sich bekannter Weise derart, dass die Stahl- Festigkeitsträger in der einen Gürtellage 2a die Stahl-Festigkeitsträger in der zweiten Gürtellage 2b kreuzen.

Im Bereich des Reifenzenites verläuft symmetrisch zur Äquatorialebene zwischen der Karkasseinlage 3 und der ersten, der radial innersten Gürtellage 2a ein Verstärkungsstreifen 7 über den Umfang des Reifens. Der Verstärkungsstreifen 7 weist eine über seine Umfangserstreckung konstante Breite b₁ auf, die 20 mm bis 70%, insbesondere bis zu 60%, der Breite der ersten Gürtellage 2a ist. Der Verstärkungsstreifen 7 besteht aus in eine Gummierungsmischung eingebetteten, parallel zueinander verlaufenden textilen Festigkeitsträgern, die unter einem Winkel von 50° bis 90°, insbesondere von bis zu 70°, zur Umfangsrichtung orientiert sind, wobei bei einer bevorzugten Ausführungsform die Festigkeitsträger im Verstärkungsstreifen 7 die Stahl- Festigkeitsträger in der ersten Gürtellage 2a kreuzen. Die Festigkeitsträger im Verstärkungsstreifen 7 bestehen aus Nylon oder Polyester. Geeignet sind insbesondere Polyestergarne mit 550 dtex bis 1680 dtex, insbesondere 1100 dtex bis 1680 dtex, oder Polyesterkorde aus zwei miteinander verdrehten Garnen mit jeweils mit 550 dtex bis 1680 dtex, insbesondere 1100 dtex bis 1680 dtex. Gut geeignet sind ferner Nylongarne mit jeweils 470 detex bis 1400 dtex oder Nylonkorde aus zwei miteinander verdrehten Garnen mit jeweils 470 dtex bis 1400 dtex, insbesondere 940 dtex bis 1400 dtex.

Gemäß der Erfindung werden in den Gürtellagen 2a, 2b relativ dünne und leichte Stahl-Festigkeitsträger verwendet, insbesondere Monofilamente mit einem Durchmesser von bis zu 0,32 mm, wodurch das Gewicht des Fahrzeugluftreifens und damit auch der Rollwiderstand geringer sind als bei herkömmlichen Ausführungen. Der mit textilen Festigkeitsträgern versehene Verstärkungsstreifen 7 im Bereich des Reifenkopfes trägt dazu bei, gute Handlingeigenschaften, insbesondere eine gute cornering stiffness, sicherzustellen.

### Bezugsziffernliste

- 1: Laufstreifen
- 2: Gürtelverband
- 2a: Gürtellage
- 2b: Gürtellage
- 3: Karkasseinlage
- 4: Innenschicht
- 5: Kern
- 6: Seitenwand
- 7: Verstärkungsstreifen
- b₁: Breite

## Patentansprüche

1. Fahrzeugluftreifen in Radialbauart, insbesondere für Personenkraftwagen, mit einem Gürtelverband (2) aus zumindest zwei Gürtellagen (2a, 2b), einem profilierten Laufstreifen (1), Wulstbereichen mit Wulstkernen (5) und einer insbesondere einlagig ausgeführten Karkasseinlage (3) mit textilen Festigkeitsträgern, wobei die Gürtellagen (2a, 2b) in eine Gummierungsmischung eingebettete parallel und beabstandet zueinander angeordnete Festigkeitsträger aus Stahl aufweisen, wobei die Stahl-Festigkeitsträger in der ersten Gürtellage (2a) die Stahl-Festigkeitsträger in der zweiten Gürtellage (2a, 2b) kreuzen und wobei zwischen der Karkasseinlage (3) und der ersten Gürtellage (2a, 2b), symmetrisch zur Äquatorialebene, ein Verstärkungsstreifen (7) eingebaut ist, der eine Breite von 20 mm bis 70 % der Breite der ersten Gürtellage (2a) aufweist und textile Festigkeitsträger enthält, welche parallel zueinander und unter einem Winkel zur Umfangsrichtung verlaufen, welcher zumindest dem Winkel der Stahl-Festigkeitsträger in den Gürtellagen (2a, 2b) und höchstens dem Winkel der textilen Festigkeitsträger in der Karkasseinlage (3) entspricht,
**dadurch gekennzeichnet,**
**dass** die Stahl-Festigkeitsträger in den Gürtellagen (2a, 2b) Monofilamente mit einem Durchmesser von 0,28 mm bis 0,32 mm oder Stahlkorde der Konstruktion 2 x 0,28 mm bis 2 x 0,32 mm sind, wobei die textilen Festigkeitsträger im Verstärkungsstreifen (7) unter einem Winkel von 50° bis 70° zur Umfangsrichtung verlaufen.

2. Fahrzeugluftreifen nach Anspruch 1, **dadurch gekennzeichnet, dass** der Verstärkungsstreifen (7) eine Breite (b₁) von 20 mm bis 60 % der Breite der ersten Gürtellage (2a) aufweist.

3. Fahrzeugluftreifen nach Anspruch 1 oder 2, **dadurch gekennzeichnet, dass** der Verstärkungsstreifen (7) eine Breite (b₁) von 20 mm bis 50 mm aufweist.

4. Fahrzeugluftreifen nach einem der Ansprüche 1 bis 3, **dadurch gekennzeichnet, dass** die textilen Festigkeitsträger im Verstärkungsstreifen (7) Polyestergarne mit 550 dtex bis 1680 dtex, insbesondere 1100 dtex bis 1680 dtex, sind.

5. Fahrzeugluftreifen nach einem der Ansprüche 1 bis 3, **dadurch gekennzeichnet, dass** die textilen Festigkeitsträger im Verstärkungsstreifen (7) Polyesterkorde aus zwei miteinander verdrehten Garnen mit jeweils 550 dtex bis 1680 dtex, insbesondere 1100 dtex bis 1680 dtex, sind.

6. Fahrzeugluftreifen nach einem der Ansprüche 1 bis 3, **dadurch gekennzeichnet, dass** die textilen Festigkeitsträger im Verstärkungsstreifen (7) Nylongarne mit jeweils 470 dtex bis 1400 dtex sind.

7. Fahrzeugluftreifen nach einem der Ansprüche 1 bis 3, **dadurch gekennzeichnet, dass** die textilen Festigkeitsträger im Verstärkungsstreifen (7) Nylonkorde aus zwei miteinander verdrehten Garnen mit jeweils 470 dtex bis 1400 dtex, insbesondere 940 dtex bis 1400 dtex, sind.

8. Fahrzeugluftreifen nach einem der Ansprüche 1 bis 7, **dadurch gekennzeichnet, dass** die Monofilamente in den Gürtellagen (2a, 2b) einen Durchmesser von 0,30 mm aufweisen.

9. Fahrzeugluftreifen nach einem der Ansprüche 1 bis 7, **dadurch gekennzeichnet, dass** die Stahlkorde in den Gürtellagen (2a, 2b) die Konstruktion 2 x 0,28 mm aufweisen.

10. Fahrzeugluftreifen nach einem der Ansprüche 1 bis 7, **dadurch gekennzeichnet, dass** die Stahlkorde in den Gürtellagen (2a, 2b) die Konstruktion 2 x 0,30 mm aufweisen.

11. Fahrzeugluftreifen nach einem der Ansprüche 1 bis 7, **dadurch gekennzeichnet, dass** die Stahlkorde in den Gürtellagen (2a, 2b) die Konstruktion 2 x 0,32 mm aufweisen.

12. Fahrzeugluftreifen nach einem der Ansprüche 1 bis 11, **dadurch gekennzeichnet, dass** die Festigkeitsträger in den Gürtellagen (2a, 2b) unter einem Winkel von 18° bis 34°, insbesondere von 20° bis 28°, zur Umfangsrichtung verlaufen.

13. Fahrzeugluftreifen nach einem der Ansprüche 1 bis 12, **dadurch gekennzeichnet, dass** er ein Reifen für Vans oder Light-Trucks ist.

## Claims

1. Pneumatic vehicle tyre of a radial type of construction, in particular for passenger cars, with a belt assembly (2) comprising at least two belt plies (2a, 2b), a profiled tread (1), bead regions with bead cores (5) and a carcass insert (3), in particular a single-ply carcass insert (3), with textile reinforcing elements, the belt plies (2a, 2b) having reinforcing elements of steel, arranged parallel to and at a distance from one another and embedded in a rubberizing compound, the steel reinforcing elements in the first belt ply (2a) crossing the steel reinforcing elements in the second belt ply (2a, 2b) and a reinforcement strip (7) being incorporated between the carcass insert (3) and the first belt ply (2a, 2b), symmetrically in relation to the equatorial plane, said strip having a width of 20 mm to 70% of the width of the first belt ply (2a) and containing textile reinforcing elements which run parallel to one another and at an angle to the circumferential direction that corresponds at least to the angle of the steel reinforcing elements in the belt plies (2a, 2b) and at most to the textile reinforcing elements in the carcass insert (3),
**characterized**
**in that** the steel reinforcing elements in the belt plies (2a, 2b) are monofilaments with a diameter of 0.28 mm to 0.32 mm or steel cords of the construction 2 × 0.28 mm to 2 × 0.32 mm, the textile reinforcing elements in the reinforcement strip (7) running at an angle to the circumferential direction of 50° to 70°.

2. Pneumatic vehicle tyre according to Claim 1, **characterized in that** the reinforcement strip (7) has a width (b₁) of 20 mm to 60% of the width of the first belt ply (2a).

3. Pneumatic vehicle tyre according to Claim 1 or 2, **characterized in that** the reinforcement strip (7) has a width (b₁) of 20 mm to 50 mm.

4. Pneumatic vehicle tyre according to one of Claims 1 to 3, **characterized in that** the textile reinforcing elements in the reinforcement strip (7) are polyester yarns of 550 dtex to 1680 dtex, in particular 1100 dtex to 1680 dtex.

5. Pneumatic vehicle tyre according to one of Claims 1 to 3, **characterized in that** the textile reinforcing elements in the reinforcement strip (7) are polyester cords comprising two twisted-together yarns of in each case 550 dtex to 1680 dtex, in particular 1100 dtex to 1680 dtex.

6. Pneumatic vehicle tyre according to one of Claims 1 to 3, **characterized in that** the textile reinforcing elements in the reinforcement strip (7) are nylon yarns of in each case 470 dtex to 1400 dtex.

7. Pneumatic vehicle tyre according to one of Claims 1 to 3, **characterized in that** the textile reinforcing elements in the reinforcement strip (7) are nylon cords comprising two twisted-together yarns of in each case 470 dtex to 1400 dtex, in particular 940 dtex to 1400 dtex.

8. Pneumatic vehicle tyre according to one of Claims 1 to 7, **characterized in that** the monofilaments in the belt plies (2a, 2b) have a diameter of 0.30 mm.

9. Pneumatic vehicle tyre according to one of Claims 1 to 7, **characterized in that** the steel cords in the belt plies (2a, 2b) have the construction 2 × 0.28 mm.

10. Pneumatic vehicle tyre according to one of Claims 1 to 7, **characterized in that** the steel cords in the belt plies (2a, 2b) have the construction 2 × 0.30 mm.

11. Pneumatic vehicle tyre according to one of Claims 1 to 7, **characterized in that** the steel cords in the belt plies (2a, 2b) have the construction 2 × 0.32 mm.

12. Pneumatic vehicle tyre according to one of Claims 1 to 11, **characterized in that** the reinforcing elements in the belt plies (2a, 2b) run at an angle to the circumferential direction of 18° to 34°, in particular of 20° to 28°.

13. Pneumatic vehicle tyre according to one of Claims 1 to 12, **characterized in that** it is a tyre for vans or light trucks.

## Revendications

1. Pneu de véhicule à type de construction radial, notamment pour voitures particulières, comprenant un ensemble ceinture (2) constitué par au moins deux couches de ceinture (2a, 2b), une bande de roulement profilée (1), des zones de bourrelets munies de tringles (5) et un insert de carcasse (3) notamment réalisé sous forme monocouche, muni de renforts textiles, les couches de ceinture (2a, 2b) comprenant des renforts en acier incorporés dans un mélange de caoutchoutage, agencés en parallèle et espacés les uns des autres, les renforts en acier dans la première couche de ceinture (2a) croisant les renforts en acier dans la deuxième couche de ceinture (2a, 2b) et une bande de renforcement (7) étant intégrée entre l'insert de carcasse (3) et la première couche de ceinture (2a, 2b), symétriquement au plan équatorial, qui présente une largeur de 20 mm à 70 % de la largeur de la première couche de ceinture (2a) et contient des renforts textiles, qui s'étendent en parallèle les uns des autres et à un angle par rapport à la direction circonférentielle, qui correspond au moins à l'angle des renforts en acier dans les couches de ceinture (2a, 2b) et au plus à l'angle des renforts textiles dans l'insert de carcasse (3),
**caractérisé en ce que**
les renforts en acier dans les couches de ceinture (2a, 2b) sont des monofilaments ayant un diamètre de 0,28 mm à 0,32 mm ou des cordes en acier de la construction 2 x 0,28 mm à 2 x 0,32 mm, les renforts textiles dans la bande de renforcement (7) s'étendant à un angle de 50° à 70° par rapport à la direction circonférentielle.

2. Pneu de véhicule selon la revendication 1, **caractérisé en ce que** la bande de renforcement (7) présente une largeur (b₁) de 20 mm à 60 % de la largeur de la première couche de ceinture (2a).

3. Pneu de véhicule selon la revendication 1 ou 2, **caractérisé en ce que** la bande de renforcement (7) présente une largeur (b₁) de 20 mm à 50 mm.

4. Pneu de véhicule selon l'une quelconque des revendications 1 à 3, **caractérisé en ce que** les renforts textiles dans la bande de renforcement (7) sont des fils en polyester de 550 dtex à 1 680 dtex, notamment de 1 100 dtex à 1 680 dtex.

5. Pneu de véhicule selon l'une quelconque des revendications 1 à 3, **caractérisé en ce que** les renforts textiles dans la bande de renforcement (7) sont des cordes en polyester constituées par deux fils vrillés l'un avec l'autre, respectivement de 550 dtex à 1 680 dtex, notamment de 1 100 dtex à 1 680 dtex.

6. Pneu de véhicule selon l'une quelconque des revendications 1 à 3, **caractérisé en ce que** les renforts textiles dans la bande de renforcement (7) sont des fils en nylon, respectivement de 470 dtex à 1 400 dtex.

7. Pneu de véhicule selon l'une quelconque des revendications 1 à 3, **caractérisé en ce que** les renforts textiles dans la bande de renforcement (7) sont des cordes en nylon constituées par deux fils vrillés l'un avec l'autre, respectivement de 470 dtex à 1 400 dtex, notamment 940 dtex à 1 400 dtex.

8. Pneu de véhicule selon l'une quelconque des revendications 1 à 7, **caractérisé en ce que** les monofilaments dans les couches de ceinture (2a, 2b) présentent un diamètre de 0,30 mm.

9. Pneu de véhicule selon l'une quelconque des revendications 1 à 7, **caractérisé en ce que** les cordes en acier dans les couches de ceinture (2a, 2b) présentent la construction 2 x 0,28 mm.

10. Pneu de véhicule selon l'une quelconque des revendications 1 à 7, **caractérisé en ce que** les cordes en acier dans les couches de ceinture (2a, 2b) présentent la construction 2 x 0,30 mm.

11. Pneu de véhicule selon l'une quelconque des revendications 1 à 7, **caractérisé en ce que** les cordes en acier dans les couches de ceinture (2a, 2b) présentent la construction 2 x 0,32 mm.

12. Pneu de véhicule selon l'une quelconque des revendications 1 à 11, **caractérisé en ce que** les renforts dans les couches de ceinture (2a, 2b) s'étendent à un angle de 18° à 34°, notamment de 20° à 28°, par rapport à la direction circonférentielle.

13. Pneu de véhicule selon l'une quelconque des revendications 1 à 12, **caractérisé en ce qu'**il s'agit d'un pneu pour camionnettes ou camions légers.
